# EUROPEAN PATENT APPLICATION

(11) **EP 1 174 970 A1**
(43) Date of publication of application: **23.01.2002**
(21) Application number: 01830450.1
(22) Date of filing: 04.07.2001
(51) Int. Cl.: H02G 1/12

(54) **"Apparatus for cutting, sheat-removing and stripping insulated cables"**

(30) Priority: 17.07.2000 IT MI201611; 23.05.2001 IT MI211079
(71) Applicant: Pluda S.r.l., 20124 Milano (IT)
(72) Inventor: Pluda, Enrico, 20100 Milano (IT)
(74) Representative: Marietti, Giuseppe

(57) **Abstract**

Apparatus for performing cutting and/or sheath-removing and/or stripping operations on coated cables (4) comprising a cutting head (1) with one or more blades (9) or tools that operate according to a pre-defined axial working direction, and means (2,3) for feed/retraction of the cable positioned upstream and/or downstream of the cutting head (1). The apparatus is furthermore provided with means (6a,6b,7,8,10a,10b) for rotating the cable (4) or pieces of cable with respect to the cutting head (1) in order to bring the cable or pieces of cable in correspondence to the above-mentioned one or more blades (9), or tools.

## Description

The present invention concerns an apparatus for performing cutting and/or sheath-removing and/or stripping of coated (insulated) cables such as single-core, multi-core or flat cables, of the type comprising a cutting head provided with blades or work tools, and means for feed/retraction of the cable towards and from the cutting head, in general consisting of drive rollers or belts.

Traditional apparatuses for such operations usually consist of a cutting head provided with a pair of variously shaped opposed blades which are induced to approach one to the other in a given axial working direction, means for feed and retraction of the cable in a straight direction incident to the working direction of the blades and, if necessary, a wire guide channel positioned immediately upstream of the cutting head, which keeps the cable straight near the blades and permits efficient completion of the sheath-removing and stripping operations.

The limit of such apparatuses is that they don't permit simultaneous processing of the ends of the cable pieces, obtained by cutting of the cable, positioned upstream or downstream of the blades.

In the use of such apparatuses, at the beginning of the various operations, the part of the coated cable to be processed protrudes from the wire guide channel in correspondence to the cutting head so that it is substantially normal to the axial blade approach direction.

The cutting operation, performed by the opposed blades mutually approaching in a sudden way, is followed, both for single-core and multi-core cables, by sheath-removing which in traditional apparatuses requires stoppage of the system to permit replacement of the cutting blades with shaped blades specific for said operation.

In traditional apparatuses, moreover, it is possible to process only one end at a time of the cable pieces positioned upstream or downstream of the pair of blades.

Having chosen the end of one of the two cable pieces to be processed and having positioned said end in correspondence to the blades, it is necessary, initially, to induce the blades to cut the cable insulation coating and then, without moving the cutting blades away, feed forward and then retract the cable in order to detach the part of the insulation to be eliminated. Having completed the sheath-removing operation on one end, it can then be identically repeated on the end of the other cable piece.

For multi-core cables, in addition to the above operations, it is necessary to strip the cores, i.e. cut and remove, for set lengths, the sheaths that coat the leads, by means of a technique similar to the one used for sheath-removing. This operation also requires replacement of the blades and, in traditional apparatuses, limits processing to one end of the cable at a time.

To compensate for the limits of the traditional apparatuses described above, apparatuses are also known for the processing of coated cables that can translate, in a straight line, the feed or retraction direction of the cable with respect to the cutting head or vice versa translate the cutting head at right angles with respect to the feed/retraction direction of the cable, in order to permit multiple operations on the same cable without having to interrupt the work cycle for replacement of the cutting head or its blades.

An apparatus of the latter type for cutting, sheath-removing and stripping coated cables that permits processing of both ends of the cable downstream and upstream of the blades is described in the international patent application WO98/13907 in the name of SCHLEUNIGER HOLDING AG.

The SCHLEUNIGER apparatus comprises a cutting head, normally provided with two opposed blade holder elements, mobile with respect to each other and each bearing one or more blades, at least two cable feed and retraction devices positioned upstream and downstream of the cutting head respectively and a pair of wire guide channels between the cutting head and the feed/retraction devices. The feed/retraction devices and/or the cutting head can translate perpendicularly with respect to an initial cable feed direction, defined during cutting of the latter, in order to position the cable in correspondence to different blades during work. The relative straight translation between blades and feed/retraction devices occurs by means of separate mechanisms activated automatically and can permit processing, simultaneously if necessary, of the ends of a previously cut cable.

In the SCHLEUNIGER apparatus referred to in application WO 98/13907, straight translation of the feed/retraction devices or the cutting head involves the use of structurally complex automatic movement means and results in considerable lateral overall dimensions of the apparatus. Moreover, movement transverse to the feed direction of the cable transport devices with respect to fixed elements of the apparatus that engage with the cables, such as sensors or wire guides, can cause excessive flexion or torsion of the cables, thereby damaging them.

Lastly, simultaneous employment of the movement means for the feed/retraction devices or the cutting head, and of a revolving wire guide channel requires the use of complex synchronisation mechanisms, thus increasing possible unreliability of the SCHLEUNIGER apparatus.

One aim of the present invention is to produce an apparatus for cutting, sheath-removing and stripping of coated cables which, while permitting simultaneous processing of the ends of a cut cable, does not have the disadvantages of the known technique described above.

Another aim of the present invention is to provide an apparatus for processing coated cables that features a high level of reliability and is inexpensive to produce.

A further aim of the present invention is to provide an apparatus for processing coated cables that is structurally simple and at the same time extremely effective and rapid in performing cutting and/or sheath-removing and/or stripping operations.

These and other aims are achieved by the device for cutting, sheath-removing and stripping of coated cables claimed in the first independent claim and in the subsequent dependent claims.

The apparatus for cutting and/or sheath-removing and/or stripping coated cables, according to the present invention, comprises a cutting head with one or more blades, or work tools, operating according to a pre-defined axial working direction, means for feed/retraction of the cable positioned upstream and/or downstream of the cutting head and means for rotation of the cable or pieces of cable with respect to the cutting head in order to position the cable or pieces of cable in correspondence to the above one or more blades or tools.

According to a preferential embodiment of the present invention, said means for rotation of the cable or pieces of cable coincide with the above-mentioned means for feed/retraction of the cable. The latter, in fact, revolve independently with respect to the cutting head, defining a number of distinct cable feed paths with respect to the cutting head.

According to another embodiment of the present invention, the means for feed/retraction located upstream and downstream of the cutting head are immediately adjacent to the cutting head.

According to a further embodiment of the present invention, the cutting head comprises two blade holder elements reciprocally opposed and moving in opposite senses along the same direction. Each of the said blade holder elements comprises one or more cable work tools, preferably positioned one after the other along a broken line.

According to a particular embodiment of the present invention, the means for rotation of the cable or pieces of cable comprise at least two wire guide channels positioned one upstream and the other downstream of the above-mentioned cutting heads, and means for independently moving the two wire guide channels to bring the end of the cable or piece of cable in correspondence to one or more blades, or tools, of said cutting head.

Some preferred embodiments of the present invention will now be described, purely as non-restrictive examples, with the help of the attached figures, in which:
figure 1 is a schematic plan view in section of an apparatus for processing coated cables according to a preferred embodiment of the present invention, in which the means for rotation of the cable or pieces of cable coincide with the means for feed and retraction;
figure 2 is a profile schematic view of an apparatus for processing coated cables similar to the apparatus of figure 1 but using means for feed/retraction of the cable different from those illustrated in figure 1;
figures 3 to 5 are schematic top plan views of an apparatus for processing coated cables, in which the means for rotation of the cable or pieces of cable coincide with the means for feed and retraction, according to a preferred embodiment of the present invention;
figure 6 is a schematic plan view of an apparatus for processing coated cables in which the means for rotation of the cable or pieces of cable coincide with the means for feed and retraction, according to another embodiment of the present invention;
figure 7 is a front view of a detail of a multiple blade cutting head, according to a preferred embodiment of the invention;
figure 8 shows a top schematic view of the apparatus according to a particular embodiment of the invention in which the means for rotation of the cable or pieces of cable comprise wire guide channels;
figure 9a shows a section of the apparatus of figure 8 according to the invention during the cutting operation;
figure 9b shows a schematic section of the apparatus of figure 8 according to the invention during the sheath-removing operation;
figure 9c shows a schematic plan section of the apparatus of figure 8 according to the invention during the stripping operation; and
figure 10 shows a schematic section view of the apparatus of figure 8 according to a further embodiment.

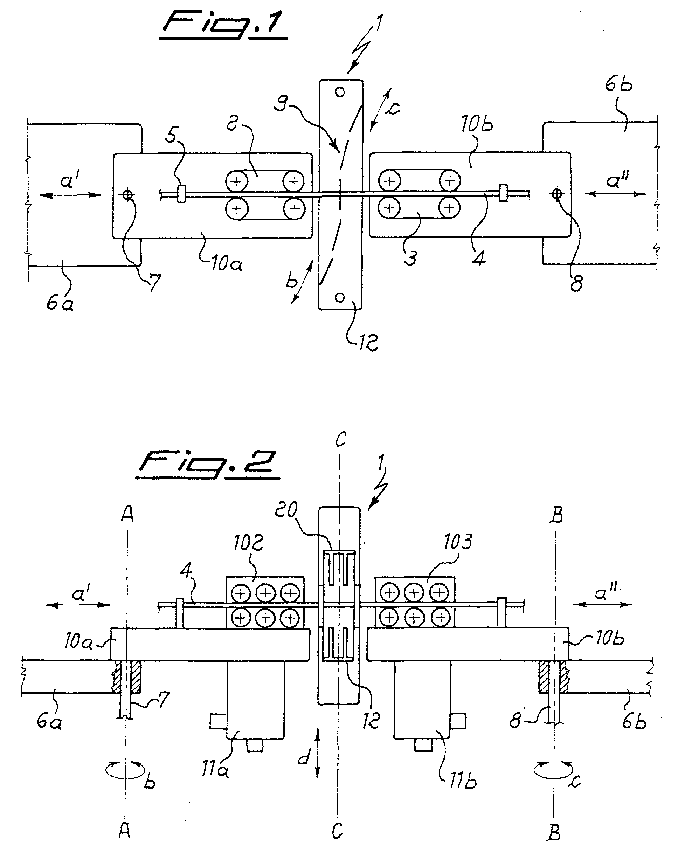

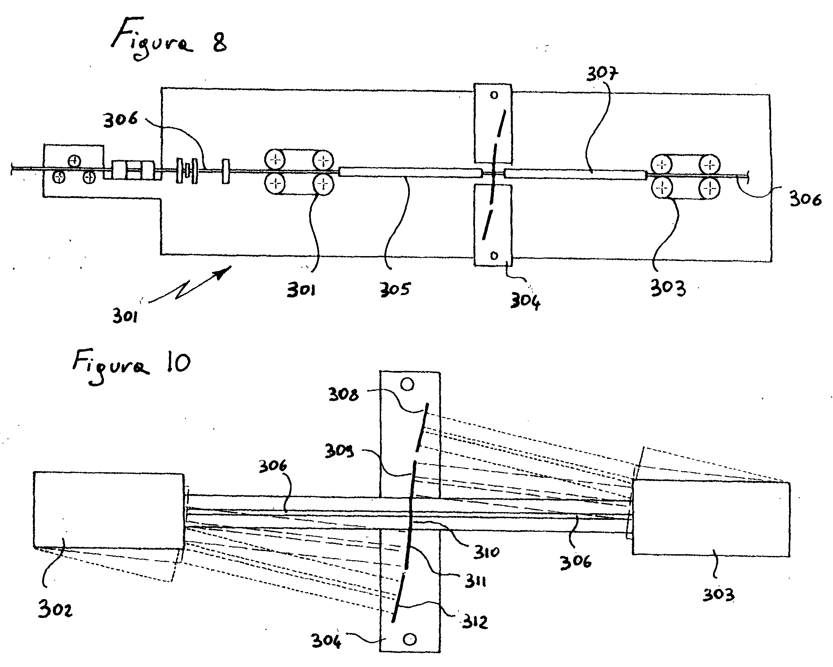

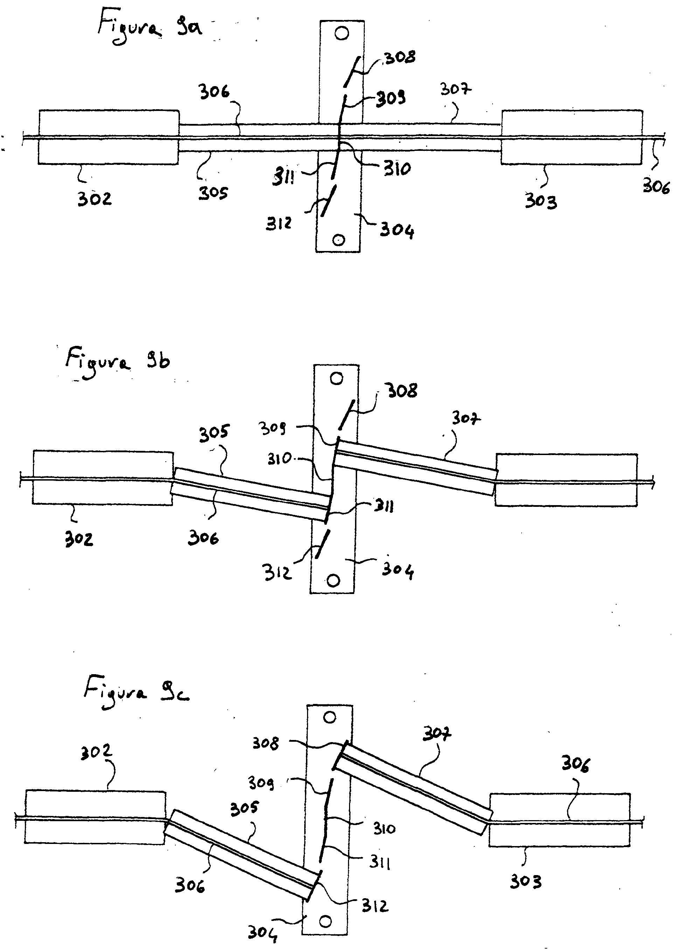

Figures 1-7 illustrate some embodiments of the apparatus according to the present invention in which the means for rotation of the cable or pieces of cable after cutting coincide with the means for feed/retraction of the cable, while figures 8-10 show an embodiment of the apparatus according to the present invention in which said means for rotation of the cable comprise wire guide channels, positioned upstream and downstream of the cutting head, appropriately rotated to bring the head of the cable or piece of cable in correspondence to the cutting blades.

With reference to figure 1, a horizontal top plan section is illustrated of an apparatus for cutting, sheath-removing and stripping a coated cable comprising a cutting head 1 and means for feed and retraction of a coated cable 4, consisting of a pair of cable drive devices 2, 3 positioned upstream and downstream respectively of the cutting head 1, and wire grommets 5 to prevent twisting of the cable being processed.

Figure 2 illustrates in profile an apparatus for processing coated cables 4 similar to the one of figure 1, with the exception of the cable feed and retraction devices 102 and 103. In figure 2 the elements identical to those of the apparatus of figure 1 are therefore indicated by the same numerical reference as figure 1.

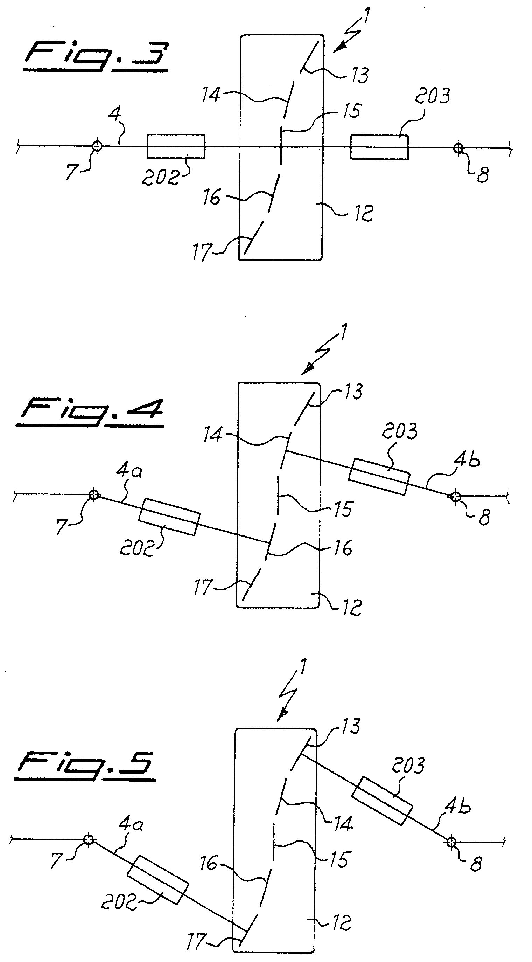

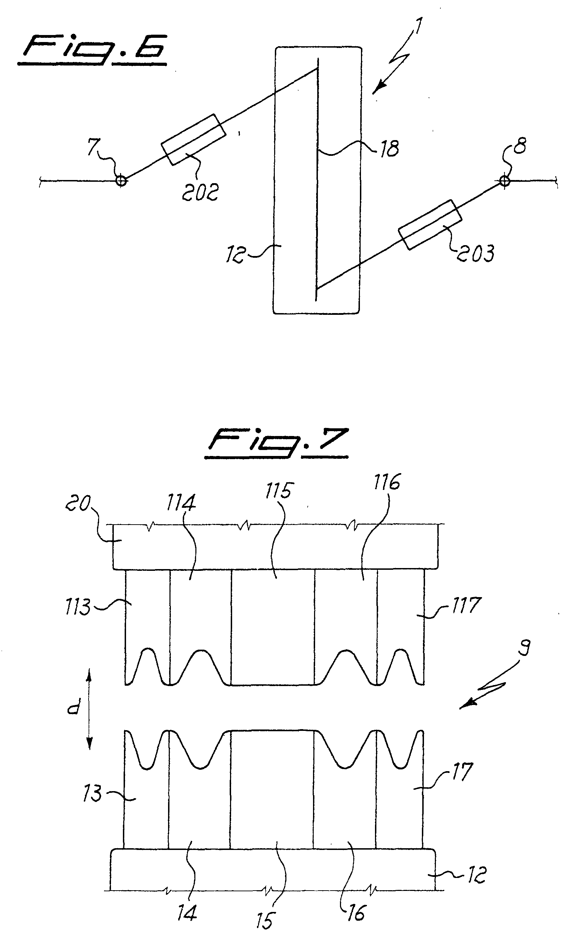

The cutting head 1, with reference also to figure 7 which is a partial front view, comprises two blade holder blocks 12, 20 reciprocally opposed and moving in opposite senses along the same axial working direction d parallel to a straight line C, substantially normal to the feed/retraction directions a', a" of the cable 4. The blade holder blocks 12, 20 of the head 1 are designed to retain one or more tools, or blades, 9 for processing the cable 4, as will be subsequently explained in detail.

The devices 2, 3 and 102, 103 are fitted on the apparatus so that they revolve independently with respect to the cutting head 1, thus presenting the cable 4 to the cutting head 1, or rather to the various work tools 9, according to different reciprocally angled paths. The devices 2, 3, 102, 103 therefore constitute the means for rotation of the cable, or pieces of cable obtained after cutting, with respect to the cutting head 1.

Since the cable 4 to be cut, or its ends to be de-sheathed and/or stripped after cutting, should engage with the blades 9 of the cutting head 1 at an substantially incident angle, and preferably at right angles, in relation to the straight working direction d, the feed/retraction devices 2, 3, 102, 103 rotate substantially on planes not containing said direction d. In detail, both devices 2, 3 or 102, 103 rotate preferably on one single plane substantially normal to said direction d.

The possibility of the two devices 2, 3 or 102, 103 rotating in a reciprocally independent fashion, furthermore, guarantees that, after cutting of the cable 4, the resulting pieces of cable can be processed in correspondence to the cutting head 1 in non-coincident directions.

The devices 2, 3 for feed/retraction of the cable 4, which in the embodiment of figure 1 are of the type with belt rotating around vertical axes, are positioned immediately adjacent to the cutting head 1 and are fitted on supports 10a, 10b respectively, in their turn connected, for the purposes of rotation, to a fixed supporting frame. In the apparatus of figure 2, on the other hand, the devices 102, 103, also fitted on revolving supports 10a, 10b, are of the type with drive rollers rotating around horizontal axes able to convey to the cutting head, for subsequent processing, not only single-core or multi-core cables but also flat cables.

The supports 10a, 10b of the apparatuses of figures 1 and 2 are furthermore connected by means of pins 7, 8, extending along the straight lines A and B, to brackets 6a and 6b respectively of the apparatus supporting frame. In this way, the supports 10a, 10b, and consequently the devices 2, 3, 102, 103 can rotate in a reciprocally independent fashion in the directions indicated by the arrows b and c of figure 1 or 2. The rotations b, c of the supports 10a, 10b occur on a plane substantially normal to the working direction d of the cutting head 1, i.e. the instantaneous rotation axes A and B of the devices 2 and 3, or 102 and 103, as shown in figure 2, are parallel to the straight line C, indicating the working direction d, along which the tools 9 of the cutting head 1 engage reciprocally to perform processing of the cable 4.

As shown in particular in figure 2, each support 10a, 10b comprises devices 11a, 11b, revolving with the same supports 10a, 10b, which are designed to rotate and control the movement of the devices 102, 103, or 2, 3, in order to independently regulate feed and/or retraction of the cable 4, or the pieces of cable 4 after cutting, upstream and downstream respectively of the cutting head 1.

Furthermore, suitable motors, for example electric stepper motors, not illustrated, permit automation of the rotary movement of the devices 2, 3 or 102, 103 for feed/retraction with respect to the cutting head 1, thus defining, for each device 2 and 3, or 102 and 103, a number of directions for sliding of the cable 4 along straight lines belonging to the same sheaf with centre respectively at the points defined by the pins 7 or 8 on the rotation plane of said devices 2, 3 or 102, 103. These motors can activate, for example, pins 7, 8 of the supports 10a, 10b, determining rotations b, c with pre-set angles.

The different sliding directions of the cable 4 or, after cutting of the cable 4, of the two pieces upstream and downstream of the head 1, driven by device 2 or 102 and device 3 or 103 respectively, intersect different blades 9 of the same cutting head 1 to permit multiple processing of the same cable 4 without requiring replacement of the cutting head. Furthermore, in the processing phases of the two pieces of cable 4, subsequent to cutting of the latter, the feed and retraction directions determined by separate rotation, for example according to different angles, of the devices 2 and 3, or 102 and 103, can be such that the two ends of the cable 4 cut are conveyed to different blades of the same cutting head 1 in order to simultaneously perform different operations on the different ends of the cable pieces.

According to a particular embodiment of the present invention, the cable feed and retraction devices 2, 3 or 102, 103 are arranged immediately adjacent to the cutting head 1 and their rotation axes 7, 8 are on opposite sides with respect to the cutting head 1, so that the presence of wire guide channels positioned between the cutting head 1 and devices 2, 3 is entirely superfluous.

The possibility of rotating the devices 2, 3 or 102, 103 for feed/retraction of the cable 4 around axes which can be at some distance from the cutting head 1 and the absence of wire guide channels permits a reduction in the mechanical complexity of the apparatus, improvement of its reliability and efficiency and increase in the radius of curvature of the cable so that it is not subjected to high flexion angles that can cause damage.

The cutting head 1, as shown in figures 3 to 5 and in figure 7, can comprise an upper blade holder block 20 and a lower blade holder block 12 which are opposed and can be activated one against the other along the same working direction d. In particular, the lower blade holder block can advantageously support a number of shaped blades 13, 14, 15, 16, 17, arranged substantially along a broken line, and the upper blade holder block can support a corresponding set of shaped blades 113, 114, 115, 116, 117, forming a mirror image.

Coupling of the opposed blades during the various cable processing operations occurs in correspondence to the feed/retraction path(s) a', a" of the cable 4 or of the pieces of cable 4 after cutting. It should be observed that, instead of one or more of the blades retained by the cutting head 1, or in addition to them, it is possible to provide for the use of other cable processing tools, for example a device for clamping the end of the cable.

More specifically, in the apparatus of figures 3-5, each blade holder block 12, 20 supports a central cutting blade 15, the ends of which support sheath-removing blades 14 e 16 respectively. The blades 14, 16 slant at the same angle with respect to the central blade 15, but one of them, blade 14, faces the cable feed/retraction device 203 positioned downstream of the cutting head, and the other blade 16 faces the feed/retraction device 202 positioned upstream. At the ends of the blades 14 and 16, opposite the ends adjacent to blade 15, there are two stripping blades 13, 17, also slanting by the same angle with respect to blades 14 and 16.

The spatial arrangement of the blades, or tools, 13, 14, 15, 16, 17 and 113, 114, 115, 116, 117 along a broken line, i.e. with the blades consecutive and at an angle to each other, permits engagement of the cable, or end of the cable piece to be processed, with each blade at right angles as the feed direction of the cable or cable piece varies.

Although the arrangement of the blades or tools on the cutting head along a broken line is particularly advantageous because the cable, or the end of a cut cable, can engage at right angles with the processing blade or tool and it is thus possible to obtain a high working precision, to further simplify the apparatus it is possible, as shown in figure 6, to provide each blade holder block 12 or 20 with only one central blade 18, shaped if necessary, able to perform all the operations envisaged.

It is also possible, in other embodiments not shown, to provide one single blade holder block 12 or 20 fitted with one or more processing tools designed to engage with an end stop, or anvil-like element, during the various cable operations.

An operating diagram of an apparatus for cutting and/or sheath-removing and/or stripping coated cables according to the present invention, in which the means for relative rotation of the cable or pieces of cable with respect to the cutting head coincide with the above-mentioned means for feed/retraction of the cable, will now be illustrated, with the help of figures 3, 4, 5 and 7, with reference to the processing of a multi-core cable. The apparatus schematised, in particular, comprises a cutting head, of which the lower blade holder block 12 can be seen in figures 3 to 5, provided with a number of blades 13-17 and 113-117 arranged along a broken line, as described above, and two cable drive devices 202, 203 constituting the means for feed and retraction of the cable, positioned respectively downstream and upstream of the cutting head with one, 202, revolving around an axis 7 and the other, 203, revolving around an axis 8. These rotation axes 7, 8 are at a distance from the cutting head and are substantially parallel to the cutting direction d of the blades 13-17 and 113-117, so that the feed/retraction directions of the cable pieces are always substantially normal to the cutting direction d. As in the embodiments illustrated in figures 1 and 2, for example, the devices 202, 203 can be appropriately fitted on revolving supports, activated by motors not illustrated.

With reference to figure 3, a multi-core cable 4 is inserted between the devices 202, 203 and through the cutting head 1 in correspondence to the central blades 15 and 115, keeping the blades 13-17 of the lower blade holder block 12 at a distance from the blades 113-117 of the upper blade holder block 20, i.e. moving the blocks 12 and 20 away from each other.

Once the cable 4 has been inserted, generally by hand, into the apparatus, the blade holder blocks 12, 20 mutually approach in a sudden way, moving along direction d, causing blade 15 to engage with blade 115 and consequently cutting the multi-core cable 4 into two pieces, 4a and 4b.

After cutting, the two blade holder blocks 12, 20 are moved away from each other and the two cable feed/retraction devices 202, 203 are rotated by the same angle in the same sense, clockwise in figure 4, with respect to the rotation axes 7 and 8 in order to bring the ends of the cable pieces 4a, 4b in correspondence to the sheath-removing blades 14 and 16 respectively. More specifically, rotation of the devices 202, 203 with respect to the axes 7 and 8 is followed by a forward movement of the cable pieces 4a, 4b towards the cutting head so that a pre-set portion to be de-sheathed of the ends of the pieces 4a, 4b goes beyond the blades 14 and 16 respectively.

The following reciprocal engagement of the blades 14, 16 with the corresponding blades 114, 116, due to the blade holder blocks 12, 20 approaching one to the other, and the forward movement and retraction of the cable pieces 4a, 4b, provided by the devices 202 and 203 while the opposed blades are reciprocally engaged, permit the required sheath-removing of the end portions of the cable pieces 4a, 4b. Said sheath-removing occurs simultaneously on both ends of the pieces 4a, 4b.

Subsequently, once the sheath-removing (de-sheathing) operation has been completed, the blades are again disengaged by moving the blocks 12 and 20 away from each other, and the devices 202, 203 are further rotated, by a given angle in the same direction, around the axes 7 and 8 respectively in order to bring the ends of the pieces 4a, 4b in correspondence to the blades 13 and 17.

The subsequent engagement of the blades 13, 17 with the corresponding blades 113, 117, after the blocks 12 and 20 have mutually approached again, and the simultaneous forward movement and retraction of the pieces 4a, 4b, performed by the devices 202, 203, permits stripping of the de-sheathed ends of the pieces 4a, 4b of the multi-core cable. This stripping operation occurs simultaneously on both ends of the cable pieces 4a and 4b. Subsequently, the blades disengage so that the processed cable can be removed from the apparatus.

With reference now to figures 8, 9a, 9b, 9c and 10, an apparatus for cutting, sheath-removing and stripping a coated cable, according to a particular embodiment of the present invention in which the means for rotation of the cable or pieces of cable comprise wire guide channels, is indicated overall by reference number 301.

The apparatus 301 comprises devices for feed and retraction of a cable 306, consisting in particular of two pairs of drive pressure rollers or belts 302, 303, a cutting head 304, two wire guide channels 305, 307 positioned upstream and downstream respectively of the cutting head 304, and means for independently moving the two wire guide elements 305, 307.

The wire guide channels 305, 307 are tubular elements inside which the cable 306 runs, the main purpose of which is to keep the cable normal to the work tool of the cutting head 304.

The ends of said wire guide channels 305, 307 nearest the cutting head 304 can rotate by means of movement devices, not shown, consisting for example of pneumatic jacks or other known mechanisms, around the instantaneous rotation centres coinciding respectively with the end of each wire guide channel farthest from the cutting head 304. It is also possible to rotate by a few degrees and independently from each other, as shown in figure 10, the cable feed and retraction devices 302, 303. In this case, each wire guide channel will rotate, integral with the corresponding device 302, 303 around an instantaneous rotation centre positioned on the end of the means for feed and retraction of the cable farthest from the cutting head.

In the embodiment of figures 8-10, therefore, the means for rotation of the cable or pieces of cable comprise the wire guide channels 305, 307, the function of which is to bring the end of the cable, or each piece of cable, in correspondence to the blades of the cutting head 304.

In greater detail, as can be seen in figures 9a, 9b, 9c, the cutting head 304, similarly to the description relating to figures 1-7, comprises preferably two blade holder elements, one opposed to the other, with respect to the cable 306, moving perpendicularly to the feed direction of the cable 306 and provided with blades 308, 309, 310, 311, 312 of different shape according to the operation required. The blade holders, and consequently the opposed blades, are approached one to the other and jointly engage in order to cut, sheath-remove (desheath) or strip the cable 306 according to the type of cable to be processed. On each blade holder, as already described with reference to figures 1-7, the differently shaped blades are arranged along a broken line so that each blade forms an angle with the straight line passing through the edge of the previous blade. The particular angle arrangement of each blade with respect to the previous one permits an impact between blade and cable 306 which is always perpendicular, even when the wire guide channel is rotated. The cable feed and retraction devices can consist of two pairs of drive pressure rollers or belts 302, 303, independently mobile on the movement plane of the wire guide channels 305, 307 in order to facilitate sliding of the cable 306 during work.

From the above description, the apparatus according to the present invention achieves its set aims due to the possibility of independent rotation, according to pre-defined angles, of the cable or pieces of cable with respect to the cutting head in order to bring the cable or pieces of cable in correspondence to the different blades, or work tools, of the cutting head.

In particular, this allows work to be performed simultaneously on the pieces of cable after cutting, thus considerably increasing productivity, without requiring the use of complex mechanisms in the apparatus.

The particular angle arrangement of the blades, along a broken line, also enables the operator to maintain a high working precision as the feed/retraction devices rotate and consequently alter the paths followed by the cable.

## Claims

1. An apparatus for performing cutting and/or sheath-removing and/or stripping operations on coated cables, of the type comprising a cutting head with one or more blades or tools operating according to a pre-defined axial working direction, means for feed/retraction of the cable positioned upstream and/or downstream of said cutting head, **characterised in that** it comprises means for rotation of the cable or pieces of cable with respect to said cutting head to bring said cable or pieces of cable in correspondence to said one or more blades, or tools, of said cutting head.

2. An apparatus according to claim 1, **characterised in that** said means for rotation of the cable or pieces of cable can revolve independently on a plane substantially incident to said axial working direction.

3. An apparatus according to any one of the claims 1 or 2, **characterised in that** said cutting head comprises at least one blade holder element moving along said axial working direction, said at least one blade holder element comprising one or more cable processing tools.

4. An apparatus according to claim 3, **characterised in that** it comprises two reciprocally opposed blade holder elements moving in opposite senses along the same axial working direction, each of said blade holder elements comprising one or more cable processing tools.

5. An apparatus according to any one of the claims 3 or 4 **characterised in that**, on said blade holder element or on each of said blade holder elements, said processing tools are arranged along a broken line.

6. An apparatus according to any one of the claims from 3 to 5, **characterised in that** said processing tools are blades and that said blade holder element or each of said blade holder elements comprises at least one central cutting blade at the ends of which are positioned, on opposite sides, a pair of sheath-removing blades and, externally, a pair of stripping blades.

7. An apparatus according to claim 6, **characterised in that** each blade is arranged at an angle with respect to the previous one.

8. An apparatus according to any one of the claims 3 or 4, **characterised in that** said one or more cable processing tools consist of one single blade fitted on said blade holder element or on each of said blade holder elements.

9. An apparatus according to claim 1, **characterised in that** said means for rotation of the cable coincide with said means for feed/retraction of the cable, the latter being able to independently revolve with respect to said cutting head.

10. An apparatus according to claim 9, **characterised in that** said means for feed/retraction can independently revolve around axes substantially parallel to said working direction of the cutting head.

11. An apparatus according to claim 9 or 10, **characterised in that** it comprises one or more revolving supports for said means for feed/retraction and motors for rotating said one or more supports revolving around parallel axes.

12. An apparatus according to any one of the claims from 9 to 11, **characterised in that** said means for feed/retraction are positioned upstream and downstream of said cutting head, in a position immediately adjacent to said cutting head.

13. An apparatus according to any one of the previous claims, **characterised in that** means for feed/retraction consist of opposed drive rollers or belts, activated automatically.

14. An apparatus according to claim 1 of the type comprising at least two wire guide channels positioned one upstream and the other downstream of said cutting head, **characterised in that** said means for rotation of the cable or pieces of cable comprise devices for moving said two wire guide channels independently from each other and for bringing them in correspondence to said one or more blades, or tools, of said cutting head.

15. An apparatus according to claim 14, **characterised in that** said devices for moving the wire guide channels comprise, for each wire guide channel, means for rotation of the respective end nearest said cutting head with respect to a centre of instantaneous rotation of said wire guide channel.

16. An apparatus according to claim 15, **characterised in that** said centre of instantaneous rotation coincides with the end of each wire guide channel farthest from said cutting head.
